# EUROPÄISCHE PATENTSCHRIFT

(11) **EP 1 237 753 B1**
(45) Veröffentlichungstag und Bekanntmachung des Hinweises auf die Patenterteilung: **26.05.2004**
(21) Anmeldenummer: 01967036.3
(22) Anmeldetag: 28.08.2001
(51) Int. Cl.: B60R 16/02

(54) **INDUKTIVER ÜBERTRAGER UND EIN VERFAHREN ZU DESSEN HERSTELLUNG**
INDUCTIVE TRANSFORMER AND METHOD FOR PRODUCING THE SAME
TRANSFORMATEUR INDUCTIF ET SON PROCEDE DE PRODUCTION

(30) Priorität: 20.09.2000 DE 10046658
(43) Veröffentlichungstag der Anmeldung: 11.09.2002
(73) Patentinhaber: ROBERT BOSCH GMBH, 70442 Stuttgart (DE)
(72) Erfinder: KAZMIERCZAK, Harald, 71717 Beilstein (DE)
(86) Internationale Anmeldenummer: PCT/DE2001/003271
(87) Internationale Veröffentlichungsnummer: WO 2002/024484

(56) Entgegenhaltungen:
- EP-A- 0 183 580
- EP-A- 1 000 812

## Beschreibung

### Stand der Technik

Die Erfindung betrifft einen induktiven Übertrager, insbesondere einen Drehübertrager, zur Signal- und/oder Energieübertragung zwischen beweglichen Bauteilen nach dem Oberbegriff des Hauptanspruchs und ein Herstellungsverfahren.

Ein derartiger übertrager ist aus EP 0 183 580 bekannt.

Es stellt sich bei der elektrischen Signal- und Energieübertragung, beispielsweise an beweglichen Teilen in einem Kraftfahrzeug in Verbindung mit an den beweglichen Teilen angebrachten Sensoren, häufig die Aufgabe, trotz mechanischer Führungsprobleme eine sichere und trotzdem flexible elektrische oder magnetische Kopplung zwischen den beweglichen Teilen herzustellen. Beispielsweise bei Lenkwinkelsensoren zur Detektierung des Drehwinkels eines Lenkrades sind zwischen der drehbaren Lenkspindel und der feststehenden Lenksäule erhebliche Montage- und Lagetoleranzen im mm-Bereich, beispielsweise ein Spiel von ca. +/-1,5mm, vorhanden.

Bei der an sich bekannten induktiven Übertragung von elektrischer Energie und Daten von der Lenksäule in das Lenkrad beim Kraftfahrzeug muss dieses Spiel auch zwischen den Primär- und Sekundärteilen des Drehübertragers vorgehalten werden. Dadurch kommt es in der Regel zu einem relativ schlechten Wirkungsgrad der Übertragung.

Da die Energieübertragung in den vorangehend beschriebenen Fällen bei ca. 1 W liegen kann, wenn nur die Lenkradelektronik versorgt werden muss und bei zusätzlichen 120 W, wenn eine Lenkradheizung versorgt werden soll, wird in herkömmlicher Weise in solchen Fällen eine Wickelfeder zur Datenübertragung und ein Schleifring zur Energieübertragung vorgesehen. Die Wickelfeder und der Schleifring haben jedoch prinzipiell einen relativ hohen Geräuschpegel und verursachen gleichzeitigen sog. EMV-Probleme (EMV = Elektro-Magnetische-Verträglichkeit).

### Vorteile der Erfindung

Gemäß der Erfindung wird ein induktiver Übertrager zur Übertragung von Messdaten und/oder elektrischer Energie zwischen zwei gegeneinander beweglichen Bauteilen mit einem primären und einem sekundären Übertragerteil mit den im Kennzeichen des Anspruchs 1 angegebenen Mitteln in vorteilhafter Weise weitergebildet. In einem sich zwangsläufig ergebenden Spalt zwischen den beweglichen Bauteilen ist erfindungsgemäß ein Gleitring angeordnet, der aus einem Kunststoff mit eingelagerten ferromagnetischen metallischen Teilen besteht.

Die metallischen Teile im Kunststoff sind dabei in vorteilhafter Weise so verteilt, dass ihr Anteil an dem Ende mit dem es an eine der Bauteile fest angeordnet ist hoch ist und zu dem Ende hin mit dem es am jeweils anderen Bauteil reibt relativ gering wird. Bevorzugt sind die metallischen Teile Eisenteile in Form von Staub, Späne oder Kugeln mit geringem Durchmesser und der Kunststoff ist Silikon oder ein Elastomer mit ähnlichen Eigenschaften. Durch diese Inhomogenität ist gewährleistet, dass im Gleitbereich der Abrieb durch den geringen Anteil an Eisenteilen klein ist und die Flussleitfähigkeit insgesamt aber verbessert ist.

Eine vorteilhafte Anwendung ergibt sich insbesondere, wenn das eine Übertragerteil an der Lenkspindel eines Fahrzeuges und das andere Übertragerteil an der Lenksäule eines Fahrzeuges angebracht ist, wobei dann auf einfache Weise über die Übertragerteile eine Messdaten- und/oder Energieübertragung durchführbar ist.

Weiterhin ist es in vorteilhafter Weise möglich gemäß eines Verfahrens zur Herstellung eines induktiven Übertragers der zuvor genannten Art den Gleitring mit folgenden Verfahrensschritten herzustellen. Zunächst wird der homogene fließfähige mit Eisenteilen gefüllte Kunststoff in eine Form für die Kontur des Gleitrings gebracht. Durch die Eigenschwere der Eisenteile erfolgt dann eine Sedimentierung dahingehend, dass die Eisenteile sich in dem Bereich in dem ein hoher Anteil gewünscht wird, absetzen anschließend härtet der nunmehr inhomogene Kunststoff aus.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele eines erfindungsgemäßen induktiven Übertragers zur Signal- und Energieübertragung zwischen Bauteilen eines Drehübertragers werden anhand der Zeichnung erläutert. Es zeigen:
Figur 1a und 1b Ansicht und Schnitt X-X eines Drehübertragers zwischen einer Lenkspindel und einer Lenksäule eines Kraftfahrzeuges mit einem Gleitring auf dem mit der Lenksäule verbundenen Bauteil,
Figur 2a und 2b Ansicht und Schnitt Y-Y eines Drehübertragers zwischen einer Lenkspindel und einer Lenksäule eines Kraftfahrzeuges mit einem Gleitring auf dem mit der Lenkspindel verbundenen Bauteil,
Figur 3 eine Detailansicht des Spaltes zwischen den Bauteilen mit dem Gleitring nach der Figur 1a und
Figur 4 einen Schnitt durch die Schichten des Gleitringes.

### Beschreibung der Ausführungsbeispiele

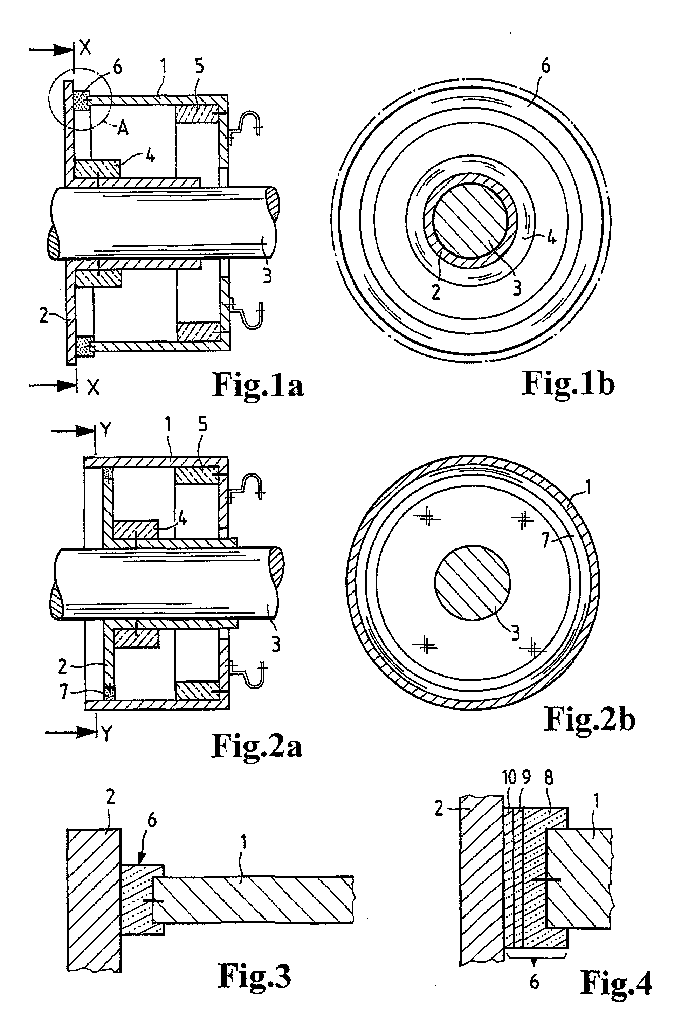

In Figur 1a und 1b ist ein, mit der Lenksäule eines hier nicht dargestellten Kraftfahrzeuges verbundenes Bauteil 1 gezeigt. Ein zweites Bauteil 2 ist am Ende einer Lenkspindel 3 abgebracht, dabei mittels eines Lenkrades drehbar und über eine entsprechende Lagerung an der Lenksäule, die fest mit dem Chassis des Fahrzeugs verbunden ist, gehalten.

Zwischen den Bauteilen 1 und 2 und somit zwischen der Lenksäule und der Lenkspindel 3 ist ein induktiver Drehübertrager mit Übertragerteilen bzw. Spulen 4 und 5 angeordnet, mit dem Messdaten und/oder elektrische Energie zwischen beispielsweise auf der Lenkspindel 3 angeordneten Sensoren und einer zentralen Auswerteeinheit im Fahrzeug übertragen werden können. Es werden dabei das primäre Übertragerteil 4 mit einer Spule und einem dazugehörigen Kern und das sekundäre Übertragerteil 5 mit einer Spule und einem dazugehörigen Kern gebildet.

Beim Aufbau von solchen induktiven Übertragern an einer Lenkvorrichtung ergeben sich in der Regel Spalte durch das fertigungs- und montagebedingte Lagerspiel. Insbesondere ist dies störend im Bereich des magnetischen Flusses zwischen den beiden Übertragerteilen 4 und 5 und somit entsteht eine nicht zu vernachlässigende Ausstrahlmöglichkeit von elektromagnetischen Strahlen, die zu Störungen im Kraftfahrzeug führen können.

Beim Ausführungsbeispiel nach der Figur 1a ist daher ein Gleitring 6 am Bauteil 1, das fest mit der Lenksäule verbunden ist, angeordnet. Der Gleitring 6 ist dabei aus einem Kunststoff mit inhomogen eingelagerten ferromagnetischen Metallteilen, insbesondere mit Eisenteilen hergestellt und wird weiter unten anhand Figur 3 und 4 beschrieben.

In Figur 2a ist ein zweites Ausführungsbeispiel gezeigt, das sich vom ersten dadurch unterscheidet, dass hier ein Gleitring 7 am Bauteil 2 fest angebracht ist, das an der Lenkspindel 3 gehalten ist. Alle weiteren im Prinzip identischen Elemente sind hier mit den gleichen Bezugszeichen wie in der Figur 1 versehen.

Aus der Figur 3 ist der Bereich A der Anordnung des Gleitringes 6 nach der Figur 1a und entsprechend auch der Figur 2 im Detail zu entnehmen. Die Eisenteile im Kunststoff des Gleitringes 6 sind dabei nach der Figur 4 so inhomogen verteilt, dass ihr Anteil an dem Ende 8, mit dem es am Bauteil 1 nach der Figur 1 fest angeordnet ist, hoch ist und über einen Bereich 9 zu dem Bereich 10 hin mit dem es am anderen Bauteil 2 reibt relativ gering wird.

## Patentansprüche

1. Induktiver Übertrager zur Übertragung von Messdaten und/oder elektrischer Energie zwischen zwei gegeneinander beweglichen Bauteilen (1,2) mit einem primären und einem sekundären Übertragerteil (4,5), bei dem zwischen den beweglichen Bauteilen (1,2) ein Spalt gebildet
und im Spalt ein Gleitring (6;7) angeordnet ist, **dadurch gekennzeichnet, dass** der Gleitring (6,7) aus einem Kunststoff mit eingelagerten ferromagnetischen metallischen Teilen besteht und dass
- die metallischen Teile im Kunststoff so inhomogen verteilt sind, dass ihr Anteil an dem Ende mit dem es an einem der Bauteile (1,2) fest angeordnet ist hoch ist und zu dem Ende hin, mit dem es am jeweils anderen Bauteil (1,2) reibt, relativ gering wird.

2. Induktiver Übertrager nach Anspruch 1, **dadurch gekennzeichnet, dass**
- die metallischen Teile Eisenteile in Form von Staub oder eine kugelförmige Anordnung von ferromagnetischen Stoffen sind.

3. Induktiver Übertrager nach Anspruch 1 Oder 2, **dadurch gekennzeichnet, dass**
- der Kunststoff Silikon oder ein Elastomer mit ähnlichen Eigenschaften ist.

4. Induktiver Übertrager nach einem der vorhergehenden Ansprüche, **dadurch gekennzeichnet, dass**
- ein Übertragerteil (4) an der Lenkspindel (2) eines Fahrzeuges und ein andere Übertragerteil (5) an der Lenksäule eines Fahrzeuges angebracht ist und dass
- über die Übertragerteile (4,5) eine Messdaten- und/oder Energieübertragung durchführbar ist.

5. Verfahren zur Herstellung eines induktiven Übertragers nach Anspruch 2, 3 oder 4, **dadurch gekennzeichnet, dass**
- der inhomogene Gleitring (6;7) mit folgenden Verfahrensschritten hergestellt wird:
- ein homogener fließfähiger mit Eisenteilen gefüllter Kunststoff wird in eine Form für die Kontur des Gleitrings (6;7) gebracht,
- durch die Eigenschwere der Eisenteile wird eine Sedimentierung dahingehend erreicht, dass die Eisenteile sich in dem Bereich in dem ein hoher Anteil gewünscht wird, absetzen und
- der Kunststoff wird ausgehärtet.

## Claims

1. Inductive transmitter for transmission of measurement data and/or electrical power between two components (1, 2) which can move with respect to one another, having a primary and a secondary transmitter part (4, 5), in which a gap is formed between the moving components (1, 2), and a sliding ring (6, 7) is arranged in the gap, **characterized in that** the sliding ring (6, 7) is composed of a plastic with ferromagnetic, metallic particles incorporated in it, and **in that**
- the metallic particles are distributed sufficiently inhomogeneously in the plastic that the portion of them at the end with which it is arranged firmly on one of the components (1, 2) is high, and is relatively low towards the end with which it rubs against the other respective component (1, 2).

2. Inductive transmitter according to Claim 1, **characterized in that**
- the metallic particles are iron particles in the form of dust, or are a spherical arrangement of ferromagnetic materials.

3. Inductive transmitter according to Claim 1 or 2, **characterized in that**
- the plastic is silicone or an elastomer with similar characteristics.

4. Inductive transmitter according to one of the preceding claims, **characterized in that**
- one transmitter part (4) is fitted to the steering spindle (2) of a vehicle, and the other transmitter part (5) is fitted to the steering column of a vehicle, and **in that**
- measurement data and/or power can be transmitted via the transmitter parts (4, 5).

5. Method for production of an inductive transmitter according to Claim 2, 3 or 4, **characterized in that**
- the inhomogeneous sliding ring (6, 7) is produced by means of the following method steps:
- a homogeneous plastic which can float and is filled with iron particles is matched to the shape of the contour of the sliding ring (6, 7),
- the natural weight of the iron particles results in sedimentation such that the iron particles are deposited in the area in which a large proportion of them is desirable, and
- the plastic is cured.

## Revendications

1. Transformateur inductif pour transmettre des données de mesure et/ou de l'énergie électrique entre deux composants (1, 2) mobiles l'un par rapport à l'autre, avec une partie de transformateur primaire et une partie de transformateur secondaire (4, 5), dans lequel un entrefer est formé entre les composants mobiles (1, 2), et un anneau de glissement (6, 7) est disposé dans l'entrefer,
**caractérisé en ce que**
l'anneau de glissement (6, 7) est composé d'une matière plastique avec des pièces métalliques ferromagnétiques insérées et les pièces métalliques sont réparties dans la matière plastique de manière non homogène de telle sorte que leur proportion est élevée à l'extrémité à laquelle elle est disposée de manière fixe sur l'un des composants mobiles (1, 2), et qu'elle est relativement réduite à l'extrémité à laquelle elle frotte (1, 2) sur l'autre composant (1, 2).

2. Transformateur inductif selon la revendication 1,
**caractérisé en ce que**
les pièces métalliques sont des pièces en fer sous forme poussiéreuse ou une disposition sphérique de matériaux ferromagnétiques.

3. Transformateur inductif selon la revendication 1 ou 2,
**caractérisé en ce que**
la matière plastique est du silicone ou un élastomère aux propriétés analogues.

4. Transformateur inductif selon l'une quelconque des revendications précédentes,
**caractérisé en ce qu'**
une partie de transformateur (4) est appliquée à l'arbre de direction (2) d'un véhicule et l'autre partie de transformateur (5) est appliquée à la colonne de direction d'un véhicule, et une transmission de données de mesure et/ou une transmission d'énergie peuvent être réalisées à l'aide des parties de transformateur (4, 5).

5. Procédé de production d'un transformateur inductif selon la revendication 2, 3 ou 4,
**caractérisé en ce que**
l'anneau de glissement non homogène (6, 7) est fabriqué selon les étapes suivantes :
- une matière plastique homogène coulante remplie de particules de fer est appliquée dans un moule pour le contour de l'anneau de glissement (6, 7),
- une sédimentation est ensuite obtenue par le poids propre des particules de fer **en ce que** les particules de fer se déposent dans la partie où l'on en souhaite une grande proportion, et
- la matière plastique est thermodurcie.
